# EUROPÄISCHE PATENTANMELDUNG

(11) **EP 1 669 571 A1**
(43) Veröffentlichungstag der Anmeldung: **14.06.2006**
(21) Anmeldenummer: 05023927.6
(22) Anmeldetag: 03.11.2005
(51) Int. Cl.: F02B 37/013, F02B 37/16, F02B 37/18, F01N 3/08, F01N 3/021

(54) **Brennkraftmaschine mit einem Abgasstrang**

(30) Priorität: 08.12.2004 DE 102004058955
(71) Anmelder: Bayerische Motoren Werke Aktiengesellschaft, 80809 München (DE)
(72) Erfinder: Jursitzky, Christian, 4441 Behamberg (AT); Plösser, Thomas, 3321 Ardagger (AT); Sadlauer, Alfred, 4432 Ernsthofen (AT)

(57) **Zusammenfassung**

Brennkraftmaschine (1) mit einem Abgasstrang (2), der sich zumindest abschnittsweise in einem Brennkraftmaschinenraum eines Kraftfahrzeuges erstreckt, wobei in dem Abgasstrang (2) eine Hochdruck-Turbine (3') eines ersten Abgasturboladers (3) und in Strömungsrichtung dahinter eine Niederdruck-Turbine (4') eines zweiten Abgasturboladers (4) angeordnet ist und wobei in dem Abgasstrang (2) im Brennkraftmaschinenraum, in Strömungsrichtung hinter der Niederdruck-Turbine (4') eine Abgasreinigungsanlage (5) angeordnet ist.

Durch die erfindungsgemäße Ausgestaltung wird die thermische Belastung der zweistufigen Abgasturboladeraufladung bei einer Regeneration der Abgasreinigungsanlage reduziert.

## Beschreibung

Die Erfindung betrifft eine Brennkraftmaschine mit einem Abgasstrang gemäß den Merkmalen aus dem Oberbegriff des Patentanspruchs 1.

Sie geht von der deutschen Offenlegungsschrift DE 102 30 934 A1 aus. In dieser ist eine schaltbare, zweistufige Abgasturboladeranordnung für eine Brennkraftmaschine beschrieben. Die Brennkraftmaschine verfügt über einen Ansaugstrang, sowie einen Abgasstrang. Brennkraftmaschinennah ist ein Hochdruck-Abgasturbolader mit einer Hochdruck-Turbine im Abgasstrang und einem Hochdruck-Verdichter im Ansaugstrang, sowie in Strömungsrichtung des Abgases dahinter ein Niederdruck-Abgasturbolader, mit einer Niederdruck-Turbine im Abgasstrang und einem Niederdruck-Verdichter im Ansaugstrang, angeordnet. Die Hochdruck-Turbine verfügt über einen Hochdruck-Turbinenbypass, die Niederdruck-Turbine verfügt über einen Wastegate. Ansaugluftseitig verfügt der Hochdruck-Verdichter über einen Hochdruck-Verdichterbypass. Ferner ist zwischen dem Hochdruck-Verdichter und der Brennkraftmaschine ein Ladeluftkühler angeordnet. Um die Normen der Abgasgesetzgebung zu erfüllen sind Abgasreinigungsanlagen wie Katalysatoren bzw. Partikelfilter gesetzlich vorgeschrieben oder zur Erreichung von Schadstoffgrenzwerten notwendig.

Aufgabe der vorliegenden Erfindung ist es, eine energetisch besonders vorteilhafte Anordnung einer Abgasreinigungsanlage aufzuzeigen.

Diese Aufgabe wird erfindungsgemäß durch die Merkmale im kennzeichnenden Teil des Patentanspruchs 1 gelöst.

Gemäß Patentanspruch 2 kann die Abgasreinigungsanlage ein Partikelfilter oder ein Katalysator oder einen katalytisch beschichteter Partikelfilter sein. Partikelfilter können durch Anfetten (Betrieb der Brennkraftmaschine mit Kraftstoffüberschuss) regeneriert werden, da durch das Anfetten die Abgastemperatur deutlich erhöht wird und der Filter vom Russ frei gebrannt wird. Während der Anfettung wird in vorteilhafter Weise die thermische Belastung der Hochdruck- und der Niederdruck-Turbine wesentlich verringert, denn je näher die Abgasreinigungsanlage an der Brennkraftmaschine angeordnet ist, desto weniger kühlt das Abgas auf dem Weg zu dieser ab. Somit erreicht die Abgasreinigungsanlage wesentlich früher ihre zur thermischen Regeneration notwendige Temperatur. Wenn die Abgasreinigungsanlage ein Katalysator ist, kann dieser mit einer dünneren Schicht Edelmetall, wie Platin oder Rhodium beschichtet werden, da die Abgase heißer an der Abgasreinigungsanlage ankommen und die katalytische Reinigung des Abgases schneller startet. Ist ein katalytisch beschichteter Partikelfilter im Brennkraftmaschinenraum angeordnet, dann addieren sich die genannten Vorteile.

Somit führt die erfindungsgemäße Ausgestaltung besonders bei einer Brennkraftmaschine mit Stufenaufladung mittels zweier Abgasturbolader zu einer deutlichen thermischen Entlastung der Turbinen, woraus eine wesentlich geringere Rissgefahr an den Turbinengehäusen, durch Verringerung der Thermoschockwirkung, resultiert. Weiter findet weniger Wärmeeintrag in das Abgasturbolagerschmieröl statt, wodurch die Verkokungsgefahr des Schmieröls verringert ist. Auch müssen die Lagergehäuse der Abgasturbolader nicht wassergekühlt werden, weil die Spitzentemperaturen im Abgas abgesenkt sind. Darüber hinaus wird das Regenerationsgeräusch, welches durch eine Veränderung des Einspritzvorganges auf Grund der Anfettung entsteht, stark abgemindert, wodurch Geräusch mindernde Maßnahmen für den Regenerationsfall entfallen können.

Im Folgenden ist die erfindungsgemäße Ausordnung anhand eines bevorzugten Ausführungsbeispieles in einer einzigen Figur näher erläutert.

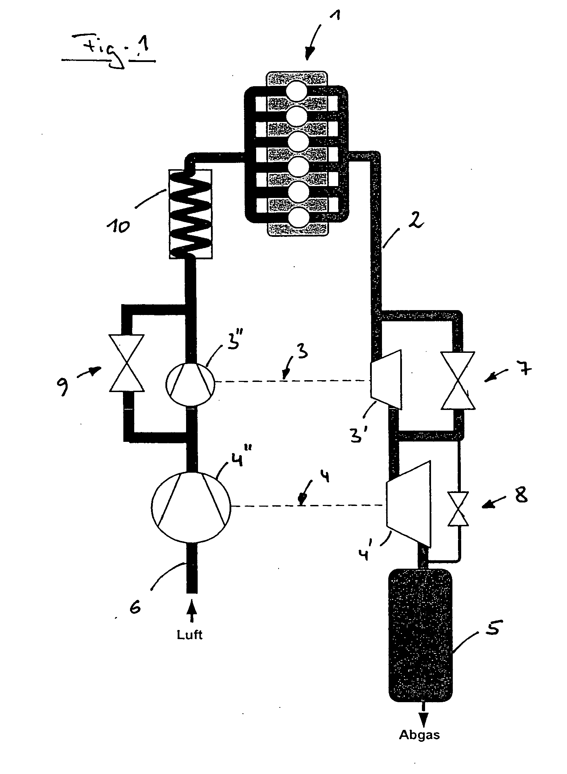

Fig. 1 zeigt schematisch eine Brennkraftmaschine 1 mit einem Abgasstrang 2. In dem Abgasstrang 2 ist brennkraftmaschinennah eine Turbine 3' eines ersten Abgasturboladers 3, sowie in Strömungsrichtung des Abgases dahinter, mit einem Pfeil gekennzeichnet, eine Niederdruckturbine 4' eines zweiten Abgasturboladers 4 angeordnet. Wiederum in Strömungsrichtung hinter der Niederdruckturbine 4' ist eine Abgasreinigungsanlage 5 in dem Abgasstrang 2 angeordnet. Neben dem Abgasstrang 2 verfügt die Brennkraftmaschine 1 über einen Ansaugstrang 6, in dem in der mit einem Pfeil gekennzeichneten Luftströmungsrichtung zuerst ein Niederdruck-Verdichter 4" des zweiten Abgasturboladers 4 und dahinter ein Hochdruck-Verdichter 3" des ersten Abgasturboladers 3 angeordnet ist. Zwischen dem Hochdruck-Verdichter 3" und der Brennkraftmaschine 1 ist ein Ladeluftkühler 10 in den Ansaugstrang 6 integriert. Der Hochdruck-Turbine 3' ist ein Hochdruck-Turbinenbypass 7, der Niederdruck-Turbine 4' ist ein Wastegate 8 zugeordnet. Weiter ist für den Hochdruck-Verdichter 3" ein Hochdruck-Verdichterbypass 9 vorgesehen.

Erfindungsgemäß sind alle in Fig. 1 dargestellten Bauelemente in einem Brennkraftmaschinenraum eines Kraftfahrzeuges angeordnet, somit auch die Abgasreinigungsanlage 5. Unter Brennkraftmaschinenraum wird der Raum verstanden, in dem die Brennkraftmaschine innerhalb einer Karosserie des Kraftfahrzeuges platziert ist. Dieser Brennkraftmaschinenraum wird in Längsrichtung des Kraftfahrzeuges von einer Trennwand zu einer Fahrgastzelle begrenzt. Ab dieser Trennwand wird von einer unterbodenanordnung gesprochen, wie sie aus dem Stand der Technik bekannt ist. Unter Abgasreinigungsanlage wird ein Partikelfilter oder ein Katalysator oder ein katalytisch beschichteter Partikelfilter verstanden. Durch die vorgeschlagene Anordnung der Abgasreinigungsanlage im Brennkraftmaschinenraum kommt es zu einer schnellen Aufheizung der Abgasreinigungsanlage 5. Dies führt zu einer deutlichen thermischen Entlastung der Abgasturbolader 3, 4, da für die Regeneration eines Partikelfilters das Abgas nur kurz angefettet werden muss, um eine Arbeitstemperatur der Abgasreinigungsanlage 5 zu erreichen. Aufgrund der kurzen Entfernung der Abgasreinigungsanlage 5 von der Brennkraftmaschine 1 kühlt das Abgas deutlich weniger aus, und heizt die Abgasreinigungsanlage 5 schnell auf ihre Arbeitstemperatur auf. Im Falle eines Katalysators als Abgasreinigungsanlage 5, erreicht dieser schneller seine Betriebstemperatur, weshalb die katalytische Edelmetallbeschichtung dünner sein kann, womit Kosten eingespart werden.

Aufgrund der verkürzten Anfettung, wird die Temperaturbelastung der Abgasturbinen 3', 4' wesentlich verringert, was die Rissgefahr an den Abgasturbinengehäusen durch Verringerung der Thermoschockwirkung reduziert. Darüber hinaus wird der Wärmeeintrag in das Abgasturboladerschmieröl wesentlich verringert, wodurch die Verkokungsgefahr des Schmieröls deutlich reduziert ist. Ferner kann eine mögliche Wasserkühlung von Lagergehäusen der Abgasturbolader 3, 4 entfallen, da die Spitzentemperaturen abgesenkt sind. Durch die Veränderung des Einspritzvorganges zur Anfettung während einer Regeneration wird auch das Regenerationsgeräusch deutlich abgemindert. Schalldämmende Maßnahmen können ebenfalls entfallen. Selbstverständlich können noch weitere Abgasreinigungsanlagen außerhalb des Brennkraftmaschinenraumes für die Abgasreinigung vorgesehen werden.

### Bezugszeichenliste

- 1: Brennkraftmaschine
- 2: Abgasstrang
- 3: Erster Abgasturbolader
- 3': Hochdruckturbine
- 3": Hochdruckverdichter
- 4: Zweiter Abgasturbolader
- 4': Niederdruck-Turbine
- 4": Niederdruck-Verdichter
- 5: Abgasreinigungsanlage
- 6: Ansaugstrang
- 7: Hochdruck-Turbinenbypass
- 8: Wastegate
- 9: Hochdruck-Verdichterbypass
- 10: Ladeluftkühler

## Patentansprüche

1. Brennkraftmaschine (1) mit einem Abgasstrang (2), der sich zumindest abschnittsweise in einem Brennkraftmaschinenraum eines Kraftfahrzeuges erstreckt, wobei in dem Abgasstrang (2) eine Hochdruck-Turbine (3') eines ersten Abgasturboladers (3) und in Strömungsrichtung dahinter eine Niederdruck-Turbine (4') eines zweiten Abgasturboladers (4) angeordnet ist,
**dadurch gekennzeichnet, dass** in dem Abgasstrang (2) im Brennkraftmaschinenraum, in Strömungsrichtung hinter der Niederdruck-Turbine (4') eine Abgasreinigungsanlage (5) angeordnet ist.

2. Brennkraftmaschine nach Patentanspruch 1,
**dadurch gekennzeichnet, dass** die Abgasreinigungsanlage (5) ein Partikelfilter und/oder ein Katalysator ist.
